Europäisches Patentamt

European Patent Office

Office européen des brevets

(1) Publication number: **0 201 981**
**B1**

# EUROPEAN PATENT SPECIFICATION

(45) Date of publication of patent specification: **03.10.90**

(51) Int. Cl.⁵: **A 01 M 7/00**

(21) Application number: **86200824.0**

(22) Date of filing: **13.05.86**

(54) **A method and an apparatus for spraying a liquid.**

(30) Priority: **13.05.85 NL 8501365**

(43) Date of publication of application:
**20.11.86 Bulletin 86/47**

(45) Publication of the grant of the patent:
**03.10.90 Bulletin 90/40**

(84) Designated Contracting States:
**AT BE CH DE FR GB IT LI LU NL SE**

(56) References cited:
**AU-A- 33 671**
**GB-A- 916 025**

**LANDTECHNIK, vol. 34, no. 2, February 1979, pages 56-59, Hannover, DE; H. GÖHLICH et al.: "Verfahrensverbesserungen im Pflanzenschutz" POWER FARMING, vol. 62, no. 2, February 1983, pages 46-49, Sutton, Surrey, GB; P. HOWARD: "Sprayer 'Black Boxes' do they help?"**

(73) Proprietor: **Multinorm B.V.**
**Hoofdweg 1278**
**NL-2153 LR Nieuw-Vennep (NL)**

(72) Inventor: **Van Zweeden, Adriaan**
**5, Verlaatsweg**
**NL-1435 GV Rijsenhout (NL)**

(74) Representative: **Hoorweg, Petrus Nicolaas et al**
**OCTROOIBUREAU ARNOLD & SIEDSMA**
**Sweelinckplein 1**
**NL-2517 GK The Hague (NL)**

Courier Press, Leamington Spa, England.

## Description

This invention relates to a method for spraying a liquid such as a herbicide mixture onto a field by means of a spraying apparatus, propellable over the field, with a series of spraying members fed by a first pump, a carrier liquid being supplied to the spraying members by means of said first pump, an active substance being added to the carrier liquid by means of a second adjustable pump to obtain said desired mixture.

With an apparatus of the above kind as disclosed in GB—A—916025 liquid can be sprayed onto the field over a considerable width, dependant on the number of adjacently arranged spraying membes, in a single working pass. This spray of liquid must be, both in the quantity and in the concentration of the active substance, as homogeneous as possible over the full width and the full length of the path travelled, in order to prevent irregular growth patterns in the crop standing in the field. In a known control system, a flow control is applied for this purpose based on the maintenance of constant pressure in the spray lines. Should the pressure in the line become too high, a portion of the liquid is then fed back to the supply tank, whereby the nominal pressure is restored. This has disadvantages since as a consequence of blockage or wear, and after replacement of the spraying members, the pressure in the system is admittedly maintained at a defined level, but the quantity of liquid distributed over the field by the spraying members is not maintained, as a result of which undesirable irregularities of growth can occur. Furthermore, in the known system the active substance is mixed in the supply tank. The disadvantage of this is that, should the supply tank not become completely emptied during spraying, it is difficult to discharge the residue responsibly as refuse. Moreover, the often expensive active substance is hereby wasted. In another control system, the volumetric flow of carrier fluid is held constant. The active substance is herein added by an adjustable dosing pump in a quantity which is dependant on the speed of travel. Although one of the disadvantages of the pressure regulation system is hereby overcome, there remains a disadvantage in that the concentration of the active substance at the spraying members changes according to the speed of travel. Since the length of the supply lines to the various spraying members is not the same in all cases, liquid having the same concentration of active substance will not arrive simultaneously at all the spraying means, which in practice will be the case only after some tens of metres have been travelled at the new speed. This results in irregular growth of the crop.

The present invention has for its object to eliminate the above disadvantages, and provides to that end a method which is distinguished in that the volume of the carrier liquid provided to the spraying means is controlled dependantly on the quantity of said active substance by a control circuit controlling the two liquid flows, in order to keep the concentration of said active substance in said mixture constant irrespective of the travelling velocity.

With the present method it is ensured that the concentration of liquid for the spraying means is constant, so that, although the quantity of the active substance is related dependantly on the travel velocity, the concentration is independent thereof. This results in a homogeneous spreading of the active substance over the full width of the strip of land to be sprayed. Moreover, the quantity of active substance which emerges from the spraying means is, without time-delay, equal to that determined by the setting of the control system.

The invention further relates to an apparatus for carrying out the above mentioned method, said apparatus comprising a first tank for the storage of a carrier liquid, a second tank for the storage of an active substance, a first pump for feeding said carrier liquid from said tank via a pressure line to a series of spraying members, and a second adjustable pump for feeding said active substance in said pressure line for obtaining a certain mixture to be sprayed on the field. The apparatus according to the invention is distinguished in that said first pump is adjustable so as to control the volume flow of the carrier liquid, and that a control circuit is provided which is adapted to control the flow of both said pumps to have the concentration of the active substance in said mixture constant irrespective of the travelling velocity.

According to one embodiment, good mixing can be achieved by connecting the exit of the second adjustable pump for the active substance to a static mixer incorporated in the pressure line of the first pump.

In another embodiment, good mixing is achieved by adding the active substance to the suction line of the first pump for the carrier fluid.

The control circuit can react to the speed of travel, the flow of liquid, the spraying pressure and the number of spraying members in operation, and can be adjusted for a desired concentration of active substance in the liquid and the desired quantity of active substance per unit surface area.

The invention will be further explained in the description of the figures, below, of an embodiment example.

In the drawings:

Figure 1 shows a rear perspective of a spraying apparatus which is carried by an agricultural tractor.

Figure 2 shows a schematic diagram of the spraying system applicable to the apparatus of Figure 1, provided with a control circuit for the adjustment of the liquid pump and the dosing pump.

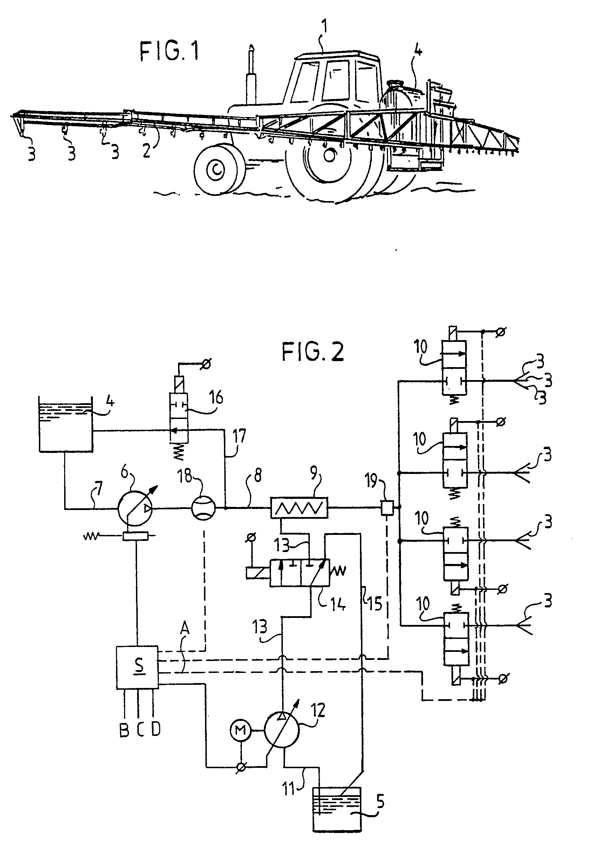

In Figure 1, number 1 indicates the agricultural tractor, to the rear of which is fitted horizontally extending boom 2, on which a number of spraying members 3 are adjacently arranged. Boom 2 consists normally of a number of sections fitted hingeably with respect to one another, each section having its own group of spraying members 3 which can be separately set in operation. Also fitted to the tractor is supply tank 4 for feeding spraying members 3.

The spraying system involved in an apparatus of this kind is shown schematically in Figure 2. Here, also, number 4 indicates the supply tank, which serves for the storage of a certain quantity of a liquid, such as water, which is necessary to spray the active substance, such as fungicide or herbicide, stored in a second supply tank.

Adjustable pump 6 is connected to supply tank 4 via a feeding line 7. The output side of adjustable pump 6 is connected via flow-meter 18 to line 8 which leads via static mixer 9 to spraying-heads 3. Line 8 is therefore split after mixer 9 first into four sections and then into a number of spray-heads per section. Each section is closable by means of electrically controllable valve 10. The second supply tank 5 containing the active substance is connected via line 11 to dosing pump 12, of which the exit leads via line 13 to static mixer 9. In line 13 is fitted electrically operable valve 14 which is also connected to supply tank 5 by return line 15. Line 8 is connected via flow-meter 18 and before static mixer 9 via, by electrically operable valve 16 closable, line 17 to supply tank 4.

Control circuit S is schematically indicated in the diagram by broken lines and is for example coupled to the electrical controllers A of valves 10 of the spraying sections. The control circuit serves to set adjustable pumps 6 and 12 to give a specific yield.

Control circuit S can further be provided with information signals which originate from, for example, the speedometer of tractor B, the required quantity of the substance to be distributed per unit surface area C, the desired concentration of substance D and the required spraying breadth.

Obviously, other input signals are possible for control circuit S.

The above-described spraying system works as follows. Upon activation of pump 6 by means of a not-shown drive motor or a power take-off of the tractor, a determinate quantity of liquid per unit time is carried via line 8 to spraying members 3 at a given rotary speed of the pump. It is assumed here that valve 16 is closed and valve 10 of each section is open. Consequent to the activation of pump 12 driven by motor M, the active substance is drawn out of supply tank 5 and carried via valve 14 placed in the one position to static mixer 9. There takes place there a mixing of the carrier liquid and the active substance, so that a predetermined mixture is offered to the spraying members.

The adjustment of pump 6 can take place by the prior input of data to control circuit S, dependent on the set and/or measured speed of travel, the desired concentration of the active substance and the desired quantity of spray liquid per unit area, the control circuit responding to the flow-meter 18 and the number of opened valves 10 in each spraying section. The control circuit determines the correct setting for pump 6, so that a particular quantity of liquid is supplied to spraying members 3, and also determines the quantity of active substance through the setting of pump 12.

When a given section of the spraying system is closed down, the position of valve 10 is instantly passed to control circuit S so that both pumps 6 and 12 are readjusted so that the supplied volume of liquid and the concentration remains the same per spraying member.

Besides the regulation of the concentration of the active substance, a means of regulation is also conceivable wherein the spraying pressure is held at a specific value in order to realize a desired pattern of drops. A pressure sensor 19 should be included in pressure-line 8.

After termination of spraying, injection pump 12 is stopped and, through continued flowing of the liquid, all lines and spraying heads are cleaned with the fresh liquid from tank 4. After cleaning, tank 4 can simply be emptied.

The invention is not limited to the above-described embodiment. Thus it is possible to replace dosing-pump 12 for the active substance by another type, for example, a dosing-pump which is fed by the liquid under pressure from supply tank 4, so that the driving can also take place via pump 6.

The embodiment of adjustable pump 6 can have any required form, the preference being given however to a plunger pump of which the stroke-length, and thus the yield, is adjustable.

**Claims**

1. A method for spraying a liquid such as a herbicide mixture onto a field by means of a spraying apparatus, propellable over the field, with a series of spraying members (3) fed by a first pump (6), a carrier liquid being supplied to the spraying members (3) by means of said first pump (6), an active substance being added to the carrier liquid by means of a second adjustable pump (12) to obtain a desired mixture, characterized in that the volume of the carrier liquid provided to the spraying means (3) is controlled dependantly on the quantity of said active substance by a control circuit (S) controlling the two liquid flows, in order to keep the concentration of said active substance in said mixture constant irrespective of the travelling velocity.

2. An apparatus for carrying out the method according to Claim 1, said apparatus comprising a first tank (4) for the storage of a carrier liquid, a second tank (5) for the storage of an active substance, a first pump (6) for feeding said carrier liquid from said first tank (4), via a pressure line (8) to a series of spraying members (3), and a second adjustable pump (12) for feeding said active substance in said pressure line (8) for obtaining a certain mixture to be sprayed on the field, characterized in that said first pump (6) is adjustable so as to control the volume flow of the carrier liquid, and that a control circuit S is provided which is adapted to control the flow of both said pumps to have the concentration of the active substance in said mixture constant irrespective of the travelling velocity.

3. An apparatus as claimed in Claim 2, characterized in that the exit of the second adjustable pump (12) for the active substance is connected to a static mixer (9) incorporated in said pressure line (8) from said first pump (6) to the spraying members (3).

4. An apparatus as claimed in Claim 2, characterized in that the exit of the second adjustable pump (12) for the active substance is connected to the suction line of said first pump (6) for the carrier liquid.

5. An apparatus as claimed in Claims 2 and 3 or 4, characterized in that the control circuit (S) includes a flow meter (19) incorporated in said pressure line (8) of said first pump (6).

6. An apparatus as claimed in Claims 2 and 3 or 4—5, characterized in that the control circuit (S) includes for each spraying member a pressure sensor incorporated in said pressure line of said first pump (6).

7. An apparatus as claimed in Claims 2 and 3 or 4—6, characterized in that the control circuit (S) includes a travelspeed sensing measuring device.

## Patentansprüche

1. Verfahren zum Versprühen von Flüssigkeit, wie beispielsweise einer Herbizidmischung auf ein Feld mit Hilfe einer Sprühvorrichtung, die über ein Feld vorwärtsgetrieben wird, mit einer Reihe sprühender Teile (3), die von einer ersten Pumpe (6) versorgt werden, einer Trägerflüssigkeit, die mit Hilfe der ersten Pumpe (6) den sprühenden Teilen (3) zugeführt wird, einer aktiven Substanz, die der Trägerflüssigkeit mit Hilfe einer zweiten, einstellbaren Pumpe (12) zugeführt wird, um eine gewünschte Mischung zu erzielen, dadurch gekennzeichnet, daß die für die sprühenden Teile vorgesehen Trägerflüssigkeitsmenge in Abhängigkeit von der Menge an aktiver Substanz durch einen die beiden Flüssigkeitsflüsse steuernden Steuerkreis (S) gesteuert wird, um die Konzentration der aktiven Substanz in der Mischung unabhängig von der Fortbewegungsgeschwindigkeit konstant zu halten.

2. Vorrichtung zur Durchführung des Verfahrens nach Anspruch 1, mit einem ersten Tank (4) zum Speichern einer Trägerflüssigkeit, einem zweiten Tank (5) zum Speichern einer aktiven Substanz, einer ersten Pumpe (6), um die Trägerflüssigkeit aus dem ersten Tank (4) über eine Druckleitung (8) einer Reihe sprühender Teile (3) zuzuführen, und einer zweiten, einstellbaren Pumpe (12) zum Zuführen der aktiven Substanz in der Druckleitung (8), um eine bestimmte auf dem Feld zu versprühende Mischung zu erzielen, dadurch gekennzeichnet, daß die erste Pumpe (6) einstellbar ist, um den Mengenfluß an Trägerflüssigkeit zu steuern, und daß ein Steuerkreis (S) vorgesehen ist, der so angepaßt ist, daß er den Durchfluß der beiden Pumpen steuert, um dabei die Konzentration der aktiven Substanz in dem Gemisch unabhängig von der Fortbewegungsgeschwindigkeit konstant zu halten.

3. Vorrichtung nach Anspruch 2, dadurch gekennzeichnet, daß der Ausgang der zweiten einstellbaren Pumpe (12) für die aktive Substanz mit einem statischen Mischer (9) verbunden ist, der in die Druckleitung (8) von der ersten Pumpe (6) zu den sprühenden Teilen (3) eingebaut ist.

4. Vorrichtung nach Anspruch 2, dadurch gekennzeichnet, daß der Ausgang der zweiten, einstellbaren Pumpe (12) für die aktive Substanz mit der Saugleitung der ersten Pumpe (6) für die Trägerflüssigkeit verbunden ist.

5. Vorrichtung nach Anspruch 2, 3 oder 4, dadurch gekennzeichnet, daß der Steuerkreis (S) einen Durchflußmesser (19) aufweist, der in die Druckleitung (8) der ersten Pumpe (6) eingebaut ist.

6. Vorrichtung nach Anspruch 2 und 3 oder 4 bis 5, dadurch gekennzeichnet, daß der Steuerkreis (S) für jedes sprühende Teil einen Drucksensor aufweist, der in die Druckleitung der ersten Pumpe (6) eingearbeitet ist.

7. Vorrichtung nach Anspruch 2 und 3 oder 4 bis 6, dadurch gekennzeichnet, daß der Steuerkreis (S) eine Fortbewegungsgeschwindigkeits-Fühl- und Meßeinrichtung aufweist.

## Revendications

1. Procédé pour pulvériser un liquide tel qu'un mélange herbicide sur un champ au moyen d'un appareil de pulvérisation déplaçable sur le terrain, avec une série d'organes de pulvérisation (3) alimentés par une première pompe (6), un liquide porteur étant distribué aux organes de pulvérisation (3) au moyen de ladite première pompe (6), et une substance active étant ajouté au liquide porteur au moyen d'une seconde pompe réglable (12) pour obtenir un mélange désiré, caractérisé en ce que le volume du liquide porteur fourni aux organes de pulvérisation (3) est commandé en fonction de la quantité de ladite substance active par un circuit de commande (S) commandant les deux courants de liquide, afin de maintenir constante la concentration de ladite substance active dans ledit mélange, indépendamment de la vitesse de déplacement.

2. Appareil pour la mise en oeuvre du procédé suivant la revendication 1, cet appareil comprenant un premier réservoir (4) pour l'emmagasinage d'un liquide porteur, un second réservoir (5) pour l'emmagasinage d'une substance active, une première pompe (6) pour amener ledit liquide porteur dudit réservoir (4) par un conduit sous pression (8) à une série d'organes de pulvérisation (3), et une seconde pompe réglable (12) pour distribuer ladite substance active dans le conduit sous pression (8) pour obtenir un certain mélange devant être pulvérisé sur le terrain, caractérisé en ce que ladite première pompe (6) est réglable afin de commander le volume d'écoulement du liquide porteur, et en ce qu'il est prévu un circuit de commande S, qui est adapté pour commander l'écoulement en provenance des deux pompes pour obtenir que la concentration de substance active dans ledit mélange soit constante indépendamment de la vitesse de déplacement.

3. Appareil suivant la revendication 2, caractérisé en ce que la sortie de la seconde pompe réglable (12) pour la substance active est reliée à une mélangeur statique (9) incorporé dans ledit conduit sous pression (8) en provenance de ladite première pompe (6) vers les organes de pulvérisation (3).

4. Appareil suivant la revendication 2, caractérisé en ce que la sortie de la seconde pompe réglable (12) pour la substance active est reliée au conduit d'aspiration de la première pompe (6) pour le liquide porteur.

5. Appareil suivant les revendications 2 et 3 ou 4, caractérisé en ce que le circuit de commande (S) comprend un débimètre (19) incorporé dans ledit conduit sous pression (8) de ladite première pompe (6).

6. Appareil suivant la revendication 2 et 3 ou 4 à 5, caractérisé en ce que le circuit de commande (S) comprend, pour chaque organe de pulvérisation, un capteur de pression incorporé dans ledit conduit sous pression de ladite première pompe (6).

7. Appareil suivant les revendications 2 et 3 ou 4 à 6, caractérisé en ce que le circuit de commande (S) comprend un dispositif de mesure captant la vitesse de déplacement.

FIG.1

FIG.2